Europäisches Patentamt

European Patent Office

Office européen des brevets

(19)

(11) Numéro de publication: **0 281 442**
**B1**

(12)

# FASCICULE DE BREVET EUROPEEN

(45) Date de publication du fascicule du brevet:
**17.01.90**

(51) Int. Cl.⁴: **B62D 1/10, F16D 1/12**

(21) Numéro de dépôt: **88400260.1**

(22) Date de dépôt: **04.02.88**

(54) **Dispositif de réglage de la position angulaire d'un volant sur une colonne de direction de véhicule automobile et volant équipé d'un tel dispositif.**

(30) Priorité: **11.02.87 FR 8701720**

(43) Date de publication de la demande:
**07.09.88 Bulletin 88/36**

(45) Mention de la délivrance du brevet:
**17.01.90 Bulletin 90/3**

(84) Etats contractants désignés:
**DE ES GB IT SE**

(56) Documents cités:
**AT-B- 295 246**
**DE-C- 900 505**
**FR-A- 507 602**
**FR-A- 577 157**
**FR-A- 997 670**
**FR-A- 2 224 016**
**FR-A- 2 557 992**
**GB-A- 509 508**
**US-A- 1 903 162**
**US-A- 1 922 596**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Henigue Christian, 6 rue des Vosges, Suarge 90100 Delle(FR)**

(74) Mandataire: **Mestre, Jean et al, c/o CABINET LAVOIX 2, place d'Estienne d'Orves, F-75441 Paris Cédex 09(FR)**

ACTORUM AG

## Description

La présente invention concerne un dispositif de réglage de la position angulaire d'un volant sur une colonne de direction de véhicule automobile et un volant de direction équipé d'un tel dispositif.

Comme il est bien connu, ce type de volant comporte en général un cercle et un moyeu, réunis de manière classique par un certain nombre de branches radiales.

Le calage en rotation du volant avec une extrémité libre de la colonne de direction, est en général effectué au moyen de cannelures ménagées dans la colonne de direction, et dans lesquelles s'emboîtent des cannelures correspondantes du moyeu. Ce moyeu comporte par ailleurs une surface tronconique destinée à coopérer avec une surface de forme complémentaire de la colonne de direction, afin d'assurer une bonne transmission des efforts entre ces deux pièces. La fixation axiale du volant et de la colonne de direction est obtenue par un écrou, par exemple indéssérable, vissé sur l'extrémité de la colonne de direction et prenant appui sur une rondelle interposée entre cet écrou et le moyeu.

La pose du volant sur la colonne de direction est effectuée après les différents réglages du train avant du véhicule. Or, ce train avant est réglé après mise en place de la barre de direction et de la colonne de direction qui lui est associée, ce qui se traduit par une répercution des réglages sur la colonne de direction qui tourne plus ou moins autour de son axe. On conçoit alors que les cannelures que comporte la colonne de direction ne sont pas, dans la majorité des cas, placées angulairement pour permettre la pose du volant de manière telle que les branches de celui-ci aient une position rigoureuse liée à la con duite et à la visibilité des appareils disposés sur le tableau de bord du véhicule, au travers de ce volant.

Par ailleurs, des opérations de réglage de la direction après mise en place du volant peuvent décaler celui-ci par rapport au réglage initial.

Afin de remédier à ces inconvénients, on a proposé de multiplier le nombre de cannelures. Le volant est en général calé angulairement sur la colonne de direction par quarante cannelures, l'incertitude de position du volant étant donc de 9°.

On connaît également d'après le document FR-A 2 557 992 un dispositif pour régler la position angulaire d'un organe calé en rotation avec un arbre, notamment d'un volant de véhicule automobile associé à une colonne de direction. Ce dispositif comprend une bague ayant sur sa surface interne des moyens d'accouplement avec un arbre, constitué par exemple par un arbre de direction et sur sa surface externe des moyens d'accouplement avec un organe tel que le moyeu du volant. Cette bague est susceptible d'être déplacée en translation à l'aide d'un élément de commande, l'un au moins des moyens d'accouplement est adapté pour déterminer, outre une translation de la bague, un déplacement angulaire du moyeu et donc du volant par rapport à l'arbre de direction.

Par ailleurs, on connaît d'après le document FR-A 997 670 un dispositif pour caler les volants de direction à deux branches. Ce dispositif, permettant de compenser par un calage correct les différences d'orientation que peut présenter le montage d'un volant à deux branches sur un arbre de direction de véhicule automobile, est caractérisé en ce qu'on interpose entre le moyeu du volant et l'arbre de direction, une bague intermédiaire dont la conformation extérieure, semblable à celle intérieure du moyeu, permet le blocage du volant sur l'arbre de direction dans la position désirée.

Suivant un mode de réalisation particulier, le moyeu du volant comporte un cône intérieur que prolonge un alésage cylindrique supérieur pourvu de rainures ou de stries longitudinales et s'engage sur une bague intermédiaire appropriée à cône inférieur et tête cylindrique rainurée bloquée sur l'arbre de direction, le blocage de l'écrou de l'arbre de directon assurant définitivement la position du volant par pénétation, les unes dans les autres, des rainures ou stries du moyeu et de la bague intermédiaire.

Enfin, les documents AT-A 295 246, GB-A 509 508, DE-C 900 505, US-A 1 922 596 et US-A 1 903 162, décrivent un certain nombre de dispositifs d'accouplement particuliers.

Cependant, tous ces dispositifs présentent un certain nombre d'inconvénients, notamment en raison de leurs structures relativement complexes augmentant d'autant les prix de revient de tels dispositifs.

Le but de l'invention est donc de résoudre les problèmes évoqués ci-dessus en proposant un dispositif de réglage, qui soit simple, fiable, permettant d'effectuer rapidement et facilement le réglage désiré et qui soit d'un prix de revient relativement faible.

A cet effet, l'invention a pour objet un dispositif de réglage de la position angulaire d'un volant sur une colonne de direction de véhicule automobile, dans lequel le volant comporte un moyeu pourvu d'un alésage axial présentant une portion de surface tronconique adaptée pour coopérer avec une portion de forme complémentaire de la colonne, des premiers moyens formant cannelures, disposés angulairement selon un pas déterminé, des moyens étant prévus pour serrer le moyeu sur la colonne, caractérisé en ce que ladite colonne se présente sous la forme d'un tube dans lequel est disposé un organe intermédiaire comportant une portion de surface tronconique adaptée pour coopérer avec une portion de forme complémentaire de la surface interne de la colonne, des moyens complémentaires adaptés pour coopérer avec lesdits premiers moyens formant cannelures du moyeu pour bloquer en rotation le moyeu et l'organe intermédiaire et en ce que les moyens de serrage sont constitués par des moyens de serrage du moyeu et de l'organe intermédiaire, de manière à coincer la colonne entre le moyeu et l'organe intermédiaire et permettre ainsi un blocage du volant dans la position de réglage désirée de celui-ci sur la colonne.

Selon un autre aspect, l'invention a également pour objet un volant de direction équipé d'un tel dispositif de réglage.

L'invention sera mieux comprise à l'aide de la description qui va suivre, donnée uniquement à titre d'exemple et faite en se référant aux dessins annexés, sur lesquels :

- la Fig. 1 représente une vue en coupe d'un premier mode de réalisation d'un dispositif de réglage selon l'invention;
- les Fig.2 et 3 représentent des vues en coupe de moyens formant cannelures entrant dans la constitution d'un dispositif selon l'invention, prises respectivement selon les lignes II-II et III-III de la Fig. 1; et
- la Fig.4 représente une vue en coupe d'un second mode de réalisation d'un dispositif de réglage selon l'invention.

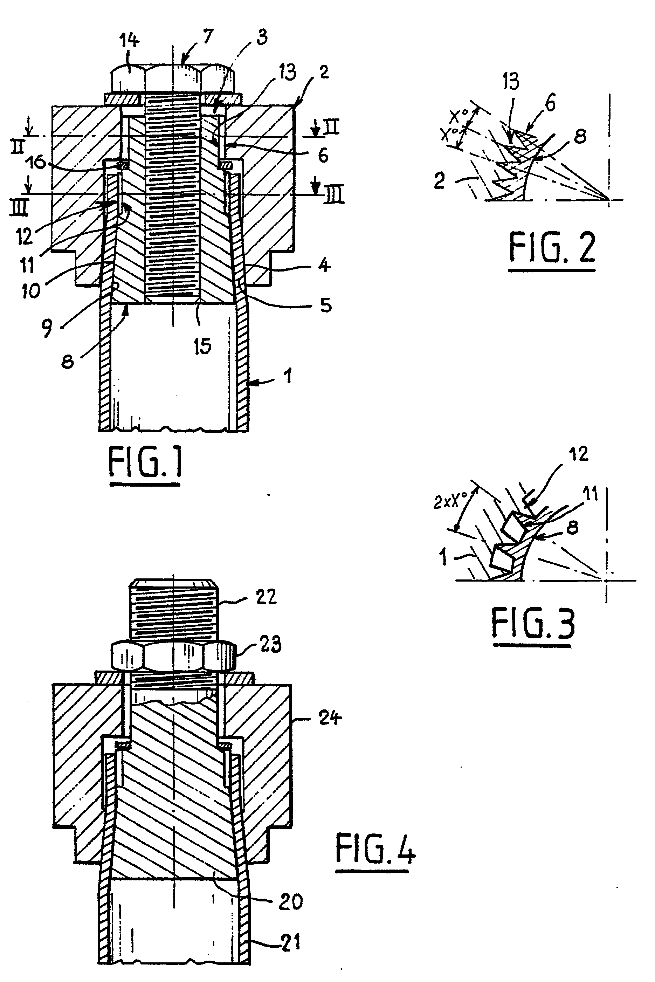

Comme on peut le voir sur la Fig.1, un volant de direction de véhicule automobile, dont il y a lieu de régler la position angulaire sur une colonne de direction 1, comprend un moyeu 2 pourvu d'un alésage axial 3 présentant une portion de surface tronconique 4 adaptée pour coopérer avec une portion 5 de forme complémentaire de la colonne 1, et des premiers moyens 6 formant cannelures, disposés angulairement selon un pas déterminé. Des moyens 7 sont également prévus pour serrer le moyeu sur la colonne de direction afin de bloquer celui-ci sur cette colonne.

La colonne de direction 1 se présente sous la forme d'un tube, dans lequel est disposé un organe intermédiaire 8 comportant une portion de surface tronconique 9 adaptée pour coopérer avec une portion 10 de forme complémentaire de la surface interne de la colonne, et des seconds moyens 11 formant cannelures, adaptés pour s'engager avec un jeu angulaire dans des moyens complémentaires 12 prévus sur une portion de surface interne correspondante de la colonne 1. Cet organe intermédiaire 8 comporte également des moyens complémentaires 13 adaptés pour coopérer avec les premiers moyens 6 formant cannelures du moyeu 2 pour les rendre solidaires en rotation.

Les moyens de serrage 7 du moyeu sur la colonne sont contstitués par des moyens de serrage du moyeu 2 et de l'organe intermédiaire 8, de manière à coincer la colonne entre le moyeu et l'organe intermédiaire et permettre ainsi un blocage du volant dans la position de réglage désirée de celui-ci sur la colonne.

Comme on le verra par la suite, les seconds moyens 11 formant cannelures et les moyens complémentaires 12 constituent des moyens de limitation du déplacement angulaire de l'organe intermédiaire par rapport à la colonne en cas de desserrage des moyens de serrage 7.

Avantageusement, ces moyens de serrage 7 comprennent une vis 14 coopérant avec un taraudage 15 de l'organe intermédiaire et en appui sur le moyeu 2 du volant.

Par ailleurs, le dispositif comporte également des moyens de blocage 16 de la position axiale de l'organe intermédiaire dans la colonne. Ces moyens sont avantageusement constitués par une bague élastique solidaire de l'organe intermédiaire et prenant appui sur le rebord de la colonne de direction pour bloquer celui-ci en position.

Comme on peut le voir plus particulièrement sur les Fig.2 et 3, le jeu angulaire entre les seconds moyens 11 formant cannelures et les moyens complémentaires 12, est par exemple au plus égal au pas X des premiers moyens 6 formant cannelures, ceci de façon à autoriser, lorsque l'utilisateur désire régler la position angulaire du volant, un déplacement angulaire de l'organe intermédiaire dans la colonne pour permettre le réglage tout en limitant ce déplacement en cas de desserrage par exemple accidentel des moyens de serrage 7.

Ainsi, lorsqu'un utilisateur désire régler la position du volant, il desserre la vis 14, ce qui lui permet de replacer le volant dans une position désirée, en entraînant l'organe intermédiaire puis resserre cette vis pour rebloquer le dispositif.

Si le volant est décalé d'une valeur supérieure à la valeur de rattrapage autorisée par le jeu entre les seconds moyens formant cannelures, et les moyens complémentaires correspondants, l'utilisateur desserre alors totalement la vis 14 de façon à pouvoir retirer le volant et le replacer dans une position à peu près correcte sur l'organe intermédiaire, le réglage final s'effectuant de la façon décrite précédemment.

Selon un autre mode de réalisation représenté à la Fig.4, l'organe intermédiaire 20 disposé dans la colonne de direction 21 comporte une portion filetée 22 sur laquelle est vissé un écrou 23 en appui sur un moyeu 24 d'un volant de direction afin de bloquer celui-ci sur cette colonne.

Il va de soi que d'autres modes de réalisation, notamment des moyens de limitation du déplacement angulaire de l'organe intermédiaire par rapport à la colonne peuvent être envisagés.

## Revendications

1. Dispositif de réglage de la position angulaire d'un volant sur une colonne de direction de véhicule automobile, dans lequel le volant comporte un moyeu (2;24) pourvu d'un alésage axial (3) présentant une portion (4) de surface tronconique adaptée pour coopérer avec une portion (5) de forme complémentaire de la colonne (1;21), et des premiers moyens (6) formant cannelures, disposés angulairement selon un pas (X) déterminé, des moyens (7) étant prévus pour serrer le moyeu (2;24) sur la colonne (1;21), caractérisé en ce que ladite colonne se présente sous la forme d'un tube dans lequel est disposé un organe intermédiaire (8;20) comportant une portion (9) de surface tronconique adaptée pour coopérer avec une portion (10) de forme complémentaire de la surface interne de la colonne, des moyens complémentaires (13) adaptés pour coopérer avec lesdits premiers moyens (6) formant cannelures du moyeu (2;24) pour bloquer en rotation le moyeu et l'organe intermédiaire et en ce que les moyens de serrage sont constitués par des moyens de serrage du moyeu (2;24) et de l'organe intermédiaire (8;20), de manière à coincer la colonne (1;21) entre le moyeu et l'organe intermédiaire et permettre ainsi un blocage du volant dans la position de réglage désirée de celui-ci sur la colonne.

2. Dispositif selon la revendication 1, caractérisé en ce qu'il comporte des moyens (11,12) de limitation du déplacement angulaire de l'organe intermédiaire par rapport à la colonne.

3. Dispositif selon la revendciation 2, caractérisé en ce que les moyens de limitation sont constitués par des seconds moyens (11) formant cannelures, ménagés sur une portion de l'organe intermédiaire (8;20) et adaptés pour s'engager avec un jeu angulaire dans des moyens complémentaires (12) ménagés sur une portion de surface interne correspondante de la colonne.

4. Dispositif selon la revendication 3, caractérisé en ce que le jeu angulaire est au plus égal au pas (X) des premiers moyens (6) formant cannelures.

5. Dispositif selon l'une quelconque des revendications 1 à 4, caractérisé en ce que les moyens de serrage (7) comprennent une vis (14) coopérant avec un taraudage (15) de l'organe intermédiaire (8) et en appui sur le moyeu (2) du volant.

6. Dispositif selon l'une quelconque des revendications 1 à 4, caractérisé en ce que les moyens de serrage (7) comprennent un écrou (23) vissé sur une portion taraudée (22) de l'organe intermédiaire (20) et en appui sur le moyeu (24).

7. Dispositif selon l'une quelconque des revendications 1 à 5, caractérisé en ce qu'il comporte des moyens de blocage (16) de la position axiale de l'organe intermédiaire (8) dans la colonne (1).

8. Dispositif selon la revendication 7, caractérisé en ce que les moyens de blocage (16) comprennent une bague élastique solidaire de l'organe intermédiaire (8) et prenant appui sur le rebord de la colonne de direction (1) pour bloquer celui-ci en position.

9. Volant de direction équipé d'un dispositif de réglage tel que défini dans l'une quelconque des revendications 1 à 8.

**Patentansprüche**

1. Vorrichtung zur Einstellung der Winkelstellung eines Lenkrades auf einer Kraftfahrzeug-Lenksäule, bei der das Lenkrad eine Nabe (2, 24) besitzt, die mit einer axialen Bohrung (3), die einen kegelstumpfförmigen Flächenbereich (4) aufweist, der mit einem Bereich (5) ergänzender Form der Säule (1, 21) zusammenwirken kann, und mit ersten, Rillen bildenden Einrichtungen (6) versehen ist, die winkelmäßig in einer bestimmten Teilung (X) angeordnet sind, wobei Einrichtungen (7) zum Festspannen der Nabe (2, 24) auf der Säule (1, 21) vorgesehen sind, dadurch gekennzeichnet, daß die Säule die Form eines Rohrs hat, in dem ein Zwischenorgan (8, 20) angeordnet ist, das einen kegelstumpfförmigen Flächenbereich (9) besitzt, der mit einem ergänzend geformten Bereich (10) der Innenfläche der Säule zusammenwirken kann, und ergänzende Einrichtungen (13), die mit den ersten, Rillen bildenden Einrichtungen (6) der Nabe (2, 24) zusammenwirken können, um die Nabe und das Zwischenorgan bezüglich Drehung zu blockieren, und daß die Festspanneinrichtungen zum Festspannen der Nabe (2, 24) und des Zwischenorgans (8, 20) bestehen, so daß die Säule (1, 21) zwischen der Nabe und dem Zwischenorgan verklemmt wird, wodurch das Lenkrad in der gewünschten Einstellung auf der Säule blockiert wird.

2. Vorrichtung nach Anspruch 1, gekennzeichnet durch Einrichtungen (11, 12) zur Begrenzung der Winkelbewegung des Zwischenorgans bezüglich der Säule.

3. Vorrichtung nach Anspruch 2, dadurch gekennzeichnet, daß die Begrenzungseinrichtungen aus zweiten, Rillen bildenden Einrichtungen (11) bestehen, die auf einem Bereich des Zwischenorgans (8, 20) vorgesehen sind und mit einem Winkelspiel in ergänzende Einrichtungen (12) eingreifen können, die auf einem entsprechenden Innenflächenbereich der Säule vorgesehen sind.

4. Vorrichtung nach Anspruch 3, dadurch gekennzeichnet, daß das Winkelspiel höchstens gleich der Teilung (X) der ersten Rillen bildenden Einrichtung (6) ist.

5. Vorrichtung nach einem der vorhergehenden Ansprüche, dadurch gekennzeichnet, daß die Festspanneinrichtungen (7) eine Schraube (14) aufweisen, die mit einem Innengewinde (15) des Zwischenorgans (8) zusammenwirkt und sich auf der Nabe (2) des Lenkrads abstützt.

6. Vorrichtung nach einem der Ansprüche 1 bis 4, dadurch gekennzeichnet, daß die Festspanneinrichtungen (7) eine Mutter (23) aufweisen, die auf einen mit Gewinde versehenen Teil (22) des Zwischenorgans (20) aufgeschraubt ist und sich auf der Nabe (24) abstützt.

7. Vorrichtung nach einem der Ansprüche 1 bis 5, gekennzeichnet durch Einrichtungen (16) zur Blockierung der axialen Stellung des Zwischenorgans (8) in der Säule (1).

8. Vorrichtung nach Anspruch 7, dadurch gekennzeichnet, daß die Blockiereinrichtungen (16) aus einem elastischen Ring bestehen, der an dem Zwischenorgan (8) befestigt ist und auf dem Rand der Lenksäule (1) aufliegt, um dieses in seiner Stellung zu blockieren.

9. Mit einer Einstellvorrichtung gemäß einem der Ansprüche 1 bis 8 ausgerüstetes Lenkrad.

**Claims**

1. Device for adjusting the angular position of a steering wheel on a motor vehicle steering column, in which the steering wheel comprises a hub (2; 24) provided with an axial bore (3) having a portion (4) defining a frustoconical surface adapted to co-operate with a portion (5) of complementary shape of the column (1; 21), and first means (6) forming splines, disposed angularly in accordance with a given pitch (X), means (7) being provided for clamping the hub (2; 24) to the column (1; 21), characterised in that said column is in the form of a tube in which is disposed an intermediate member (8; 20) comprising a portion (9) defining a frustoconical surface adapted to co-operate with a portion (10) of complementary shape of the inner surface of the column, complementary means (13) adapted to co-operate with said first means (6) forming splines of the hub (2; 24) for preventing the hub and the intermediate member from rotating and in that the clamping means are constituted by means for clamping the hub (2; 24) and the intermediate member (8; 20) in such a manner as to jam the column (1; 21) between the hub and the intermediate member and thus permit locking of the steering wheel in the desired position of adjustment of the latter on the column.

2. Device according to Claim 1, characterised in that it comprises means (11, 12) for limiting the angular displacement of the intermediate member relative to the column.

3. Device according to Claim 2, characterised in that the limiting means are constituted by second means (11) forming splines, provided on a portion of the intermediate member (8; 20) and adapted to engage with an angular clearance in complementary means (12) provided on a corresponding portion of the inner surface of the column.

4. Device according to claim 3, characterised in that the angular clearance is at the most equal to the pitch (X) of the first means (6) forming splines.

5. Device according to one of Claims 1 to 4, characterised in that the clamping means (7) comprise a screw (14) co-operating with a tapped hole (15) in the intermediate member (8) and bearing against the hub (2) of the steering wheel.

6. Device according to one of Claims 1 to 4, characterised in that the clamping means (7) comprise a nut (23) screwed onto a tapped portion (22) of the intermediate member (20) and bearing against the hub (24).

7. Device according to one of Claims 1 to 5, characterised in that it comprises means (16) for locking the axial position of the intermediate member (8) in the column (1).

8. Device according to Claim 7, characterised in that the locking means (16) comprise a resiliently yieldable ring integral with the intermediate member (8) and bearing against the edge of the steering column (1) for locking the latter in position.

9. Steering wheel equipped with an adjusting device as defined in one of Claims 1 to 8.

FIG.1

FIG.2

FIG.3

FIG.4